# EUROPEAN PATENT SPECIFICATION

(11) **EP 1 988 449 B1**
(45) Date of publication and mention of the grant of the patent: **22.02.2012**
(21) Application number: 08013377.0
(22) Date of filing: 19.10.2001
(51) Int. Cl.: G06F 3/048, G06Q 10/00

(54) **Method and computer system for display state adjustment of tree-nodes**
Verfahren und Computersystem zur Anzeigestatuseinstellung von Baumknoten
Procédé et système informatique pour le réglage de l'état de l'affichage de noeds d'arbre

(43) Date of publication of application: 05.11.2008
(62) Divisional of application: 01124964.6
(73) Proprietor: SAP AG, 69190 Walldorf (DE)
(72) Inventor: Hofmann, Christoph, 69168 Wiesloch (DE)
(74) Representative: Müller-Boré & Partner Patentanwälte

(56) References cited:
- GB-A- 2 346 717
- US-A- 5 701 137
- US-A- 6 115 044
- US-A- 6 151 024
- PRASUN DEWAN: "AN INHERITANCE MODEL FOR SUPPORTING FLEXIBLE DISPLAYS OF DATA STRUCTURES" SOFTWARE PRACTICE & EXPERIENCE, WILEY & SONS, BOGNOR REGIS, GB, vol. 21, no. 7, 1 July 1991 (1991-07-01), pages 719-738, XP000297325 ISSN: 0038-0644

## Description

### Field of the Invention

The present invention generally relates to electronic data processing, and more particularly, relates to method, computer program product and system for using hierarchies.

### Background of the Invention

Typically, hierarchical information in a computer system is visualized for a human user via a tree structure. For example, the Microsoft Windows Explorer displays the hierarchical directory structure of a hard drive by using a tree graphic. The root-directory of the hard drive (e.g. C:\) corresponds to a root-node at the top of the tree. Sub-directories (e.g. Program Files, Documents and Settings) of the root-directory are listed below as child-nodes of the root-node by using connection lines to the root-node indicating their hierarchical relationship. Each sub-directory can have further sub-directories with a corresponding visualization.

Some applications use tree structures to control for example access to an object represented by a node. In a further example, other applications (e.g. SAP R/3) use tree structures to customize a complete application system according to the individual needs of an enterprise by activating or deactivating components of the application system. In both examples, nodes in the tree can be activated (access allowed, component active) and deactivated (access denied, component inactive) to achieve the desired effect.

In some cases there is a need to temporarily deactivate nodes in a tree. For example, in preparation of a system upgrade, a system administrator temporarily deactivates the access to all nodes in a tree by deactivating the root-node of the tree. Typically, this implies the deactivation of all sub-nodes in the tree. It is not possible to change the status of a node within a deactivated tree or sub-tree. After the system upgrade, the previous activation status of all sub-nodes in the tree has to be reestablished. In prior art systems, this is usually done manually by the system administrator.

P. Dewan "An inheritance model for supporting flexible displays of data structures", John Wiley & Sons Ltd., vol. 21, no. 7, July 1, 1991 refers to an inheritance model that reduces the effort required to define presentations of data structures of programs written in conventional languages.

US 6,115,004 A refers to a data processing control display system for the interactive display and control of operations through a display tree having a plurality of items to be acted upon, wherein a parent item at one level has at least one child item at the next lower level, and means for enabling a modification of at least one property of all of the child items by enabling a designation of the modification of the property at the parent level without the modification of any property of the parent item.

US 6,151,024 A refers to a data processing controlled display system for the interactive display and control of a hierarchical tree of elements or objects which are selectable to display detailed views of the attributes of the child objects of the selected parent object.

Document 5,701,137 discloses a method for interactive display of a graphical tree structure in a windowing environment. A tree control graphically represents hierarchical data. The user can separate a portion of a tree control at a node and create a new tree control for viewing and editing. Changes to a newly created tree control propagate through to related tree control.

### Summary of the Invention

Hence, the present invention provides computer-implemented method, computer program product and computer system to provide a solution to the technical problem of losing the previous control status information of a sub-node in a sub-tree of a tree, when changing the control status of the root-node of the sub-tree.

A further technical problem solved by the present invention is that a prior art system does not support changing the control status of a node that belongs to a deactivated sub-tree.

As used hereinafter, the following terms and abbreviations are used according to the following definitions:
Tree: hierarchy having a root-node (R) and a plurality of sub-nodes (S), wherein the root-node has no parent-node (P) and each sub-node has one parent-node and can have multiple child-nodes. The hierarchy can comprise any number of hierarchy levels.
Sub-tree: a portion of a tree, wherein a sub-node of the tree is the root-node of the sub-tree.
Path: unique identifier for a node (N) in a tree, comprising identifiers of its parent-node (P), of the parent of the parent-node (P-1), etc. up to the root-node (R) of the tree (e.g. \R\P-3\P-2\P-1\P\S).
Sub-path: a portion of a path to a sub-node (S), wherein the sub-path starts with a further sub-node (e.g. (P-2)) of the tree (e.g. \P-2\P-1\P\S). The further sub-node (P-2) has a direct or indirect parent-child relation to the sub-node (S).

Propagation attribute of a node (PA): node attribute to forward node properties of a node at a specific hierarchy level to the node's child-nodes at the next lower hierarchy level. For example, the propagation attribute can control the usage of a node by an application. The PA can have multiple propagation states (e.g. PS1, PS2)

Control attribute of a node (CA): node attribute having multiple control states (e.g. CS1, CS2). For example, the PA of a sub-node depends on the CA of all nodes in the path to the sub-node.

Display attribute of a node (DA): node attribute to control the visual appearance of a node in a tree. The DA can have multiple display states (e.g. DS1, DS2, DS3).

To solve the aforementioned problems, the present invention provides method, computer system and computer program product using the following features:
1a) Providing a predefined tree. The tree has a plurality of nodes, wherein each node has a predefined propagation attribute, a predefined control attribute and a predefined display attribute.
1b) Changing the control attribute of a node, wherein the node defines a sub-tree of the tree. Each node of the sub-tree has a parent-node.
1c) Calculating the propagation attribute of each node of the sub-tree depending on the node's control attribute and the propagation attribute of the corresponding parent-node according to predefined propagation rules.
1d) Adjusting the display attribute of each node of the sub-tree with respect to the node's control attribute and the node's propagation attribute according to predefined display rules.

Preferably, but not limiting the invention, the control attribute of a node can have two control states, such as active and inactive. More than two control states are possible.

Preferably, but not limiting the invention, the propagation attribute of a node can have two propagation states, such as active and inactive. More than two propagation states are possible.

Preferably, but not limiting the invention, the display attribute can have three display states, such as active, inactive and implicitly inactive. The number of display states is higher than the number of control states.

It is an advantage of the invention, that control attribute and display attribute of a tree node are separated. This allows to have more states for the display attribute than for the control attribute. Therefore, by setting an appropriate display attribute for each sub-node in a sub-tree, the inventive computer system indicates to a user the overall propagation attribute of the sub-tree without losing the information about the control attribute of a single sub-node of the sub-tree. The user gets better control of the computer system, because:
- The computer system supports the changing of the control attribute of a sub-node of a sub-tree, even when, for example, the sub-tree is deactivated. For example, in an organization, a user of a department of the organization can independently change the control attribute of nodes within the department's area of responsibility, even when a superior department of the organization has deactivated the sub-tree that corresponds to the area of responsibility of the department.
- The computer system provides a "preview" functionality to the user that indicates the impact on the tree in case the control attribute of a node is changed.

The aspects of the invention will be realized and attained by means of the elements and combinations particularly pointed out in the appended claims. It is to be understood that both, the foregoing general description and the following detailed description are exemplary and explanatory only and are not restrictive of the invention as described.

### Brief Description of the Drawings

- FIG. 1: illustrates a simplified block diagram of a computer system;
- FIG. 2: illustrates details of the computer,system with a typical screen view according to the present invention;
- FIG. 3: illustrates examples of state matrices that define propagation and display rules;
- FIG. 4: illustrates three consecutive time points of the computer system, when operated according to the present invention;
- FIG. 5: illustrates an example of an inventive screen view that displays a tree;
- FIG. 6: illustrates simplified flow charts of the inventive method;
- FIG. 7: illustrates simplified flow charts of a further method according to the present invention; and
- FIG. 8: illustrates a simplified flow charts of a still further method according to the present invention.

### Detailed Description of the Invention

Wherever possible, the same reference numbers will be used throughout the drawings to refer to the same or like parts. For convenience of explanation a list of references is provided prior to the claims.

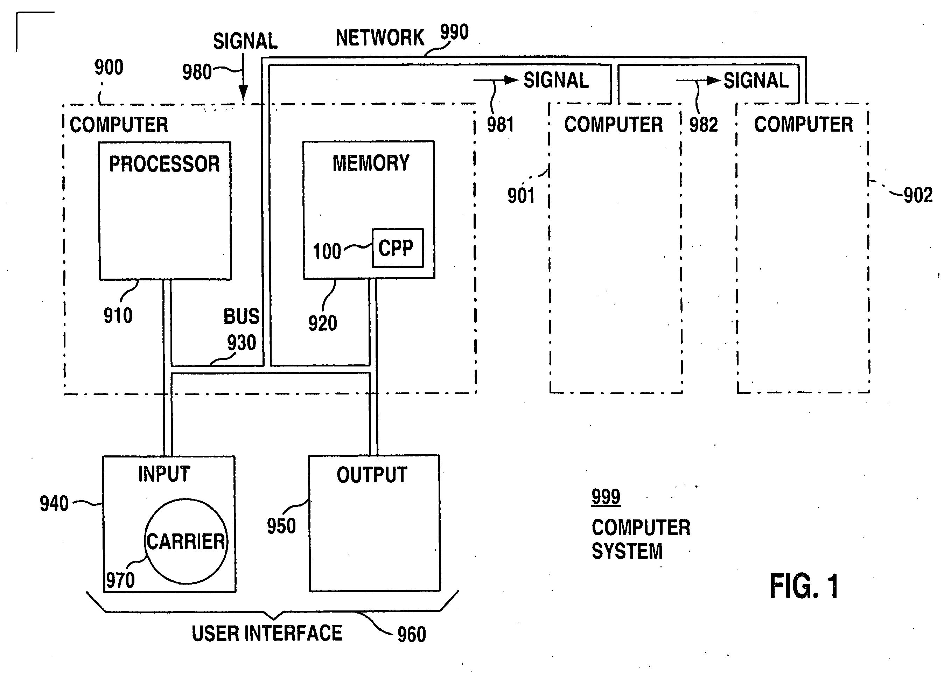

FIG. 1 illustrates a simplified block diagram of the inventive computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text-processing tool. Support modules are commercially available and can be installed on computer 900 by those of skill in the art. For simplicity, these modules are not illustrated.

CPP 100 comprises program instructions and optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

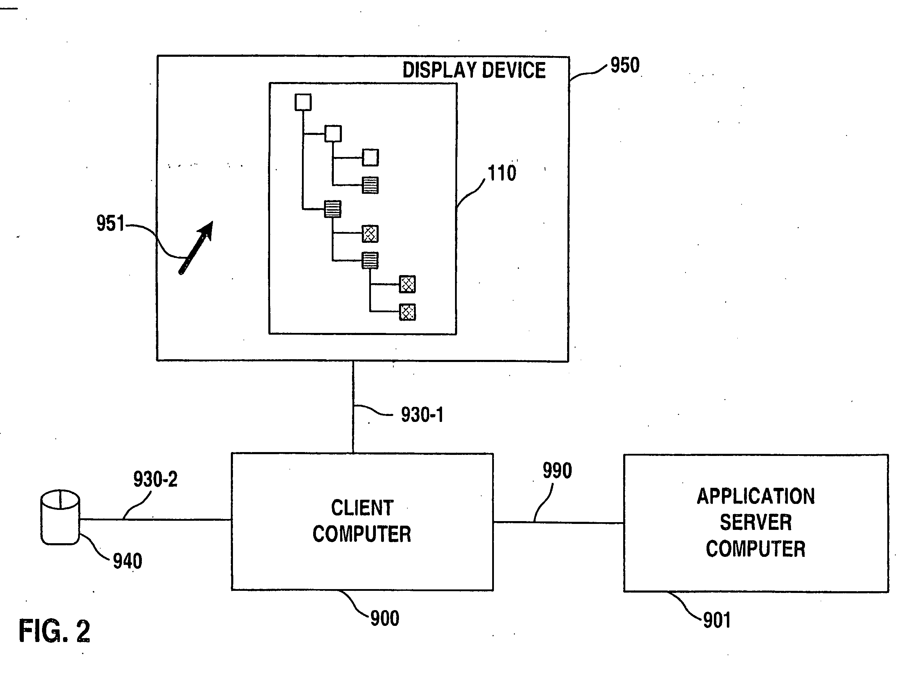

FIG. 2 illustrates details of the inventive computer system with a typical screen view according to the present invention.

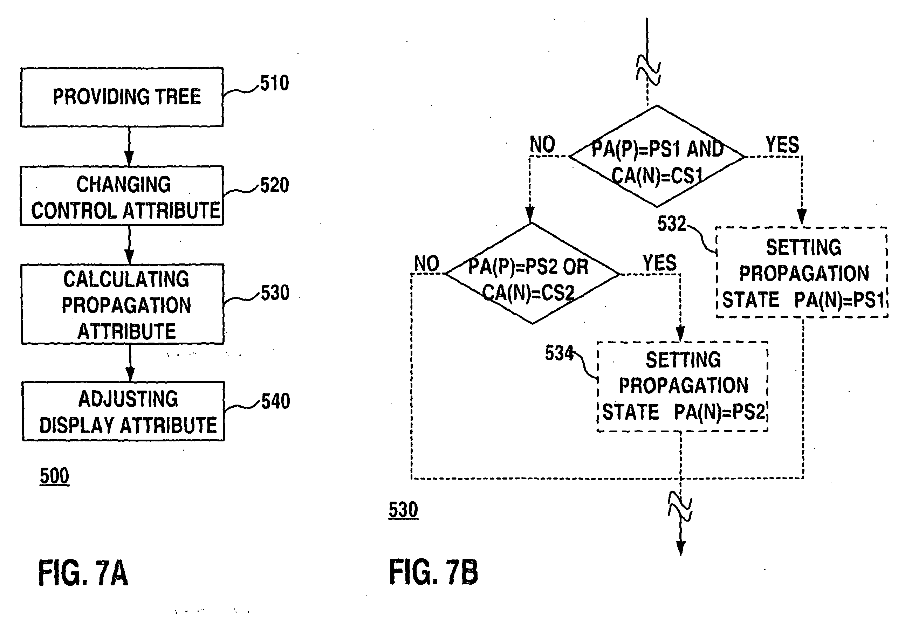

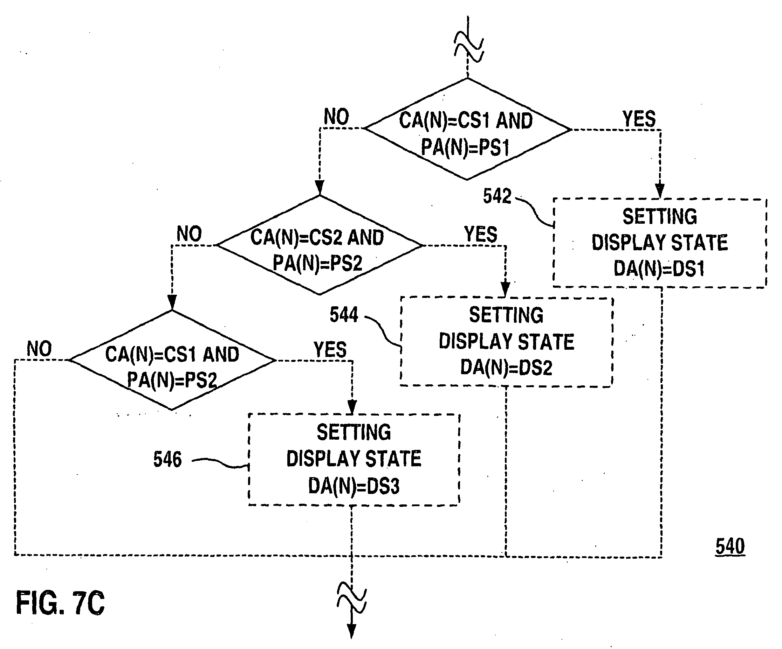

Without the intention to restrict the use of computer 900, preferably, computer 900 serves as client computer 900 for a user (not shown) to access application server computer 901 through network 990. Preferably, application computer 901 provides application data to the user, such as predefined hierarchy data. Client computer 900 also can store predefined hierarchy data. The user interacts with computer 900 by using user interface 960 (cf. FIG. 1) that comprises input device 940 (e.g. mouse device) and output device 950 (e.g. monitor). Input device 940 and output device 950 are connected to client computer 900 via bus branches 930-2 and 930-1, respectively. For example, output device 950 visualizes hierarchy data as tree 110. Preferably, input device 940 controls cursor 951 displayed on output device 950 via client computer 900. When cursor 951 on output device 950 is moved to tree 110 (explained in detail under FIG. 7), the user can initiate changes of the corresponding hierarchy data by, for example, using buttons of input device 940.

Nodes of tree 110 are illustrated as squares. The different patterns (white, bar, grid) symbolize a different visual appearance of the nodes on output device 950. According to the present invention, the visual appearance of a node depends on the node's display attribute.

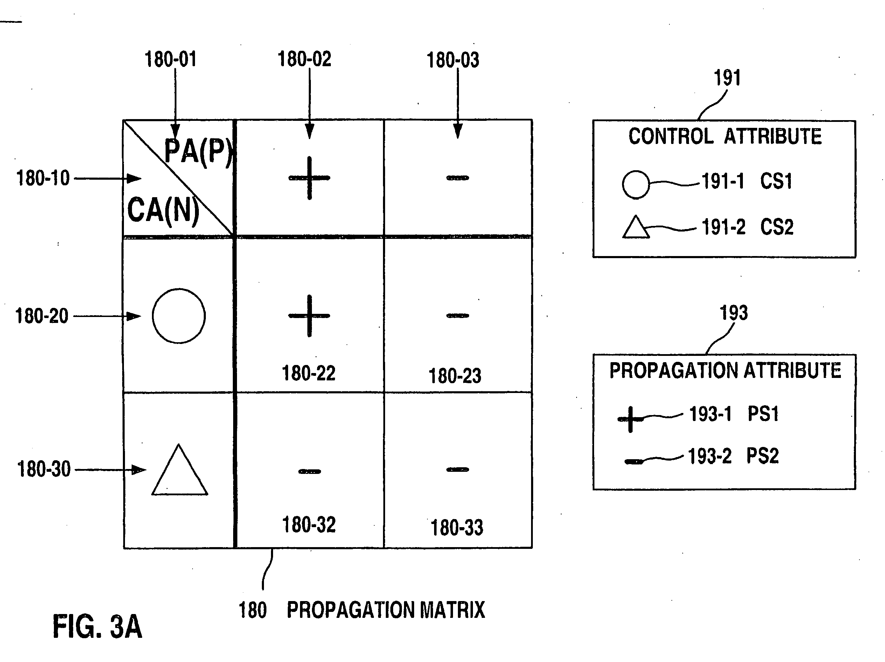

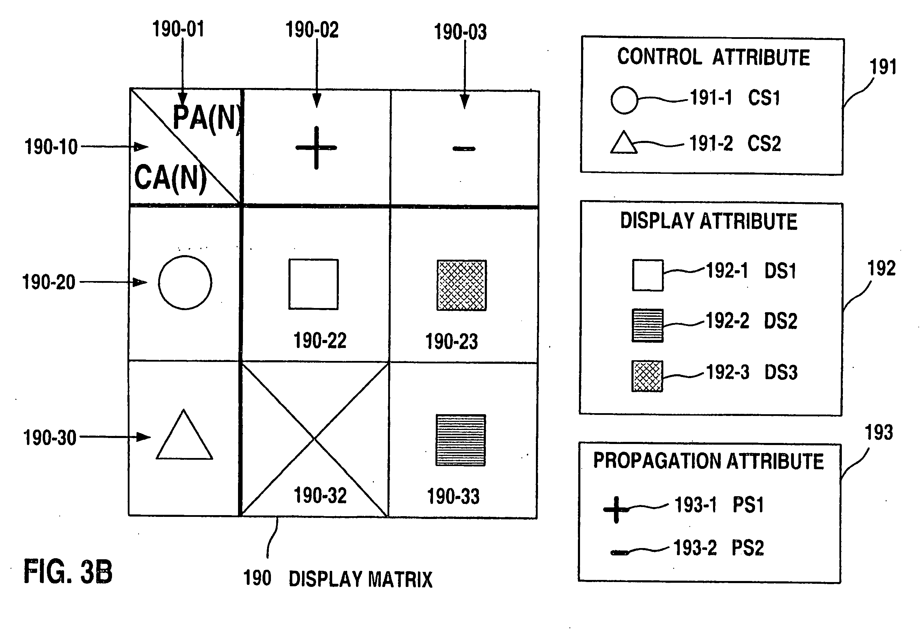

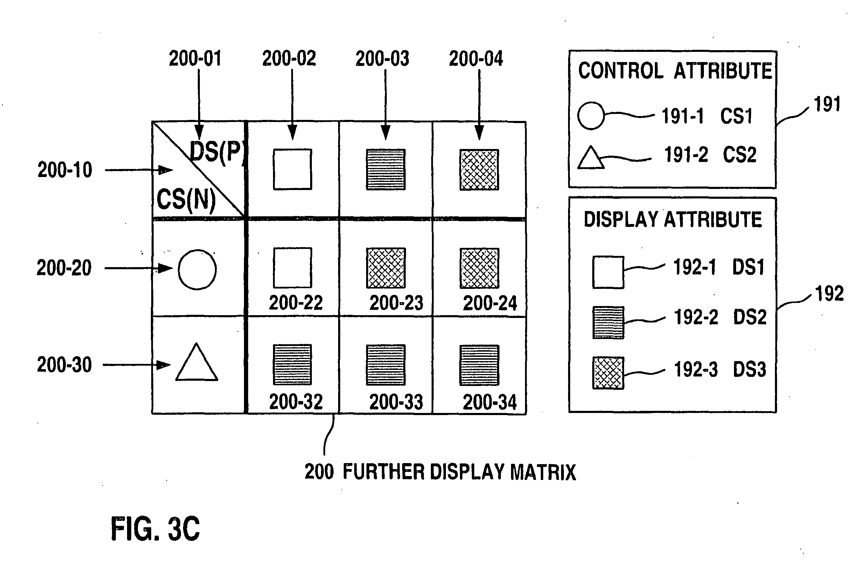

FIG. 3 illustrates examples of state matrices that define propagation rules and display rules. Cells of state matrices are referred to by reference numbers where the row index (e.g. 180-20) is combined with the column index (e.g. 180-02) to a cell index (e.g. 180-22, indicating the cell comprising PS1 in propagation matrix 180; cf. FIG. 3A).

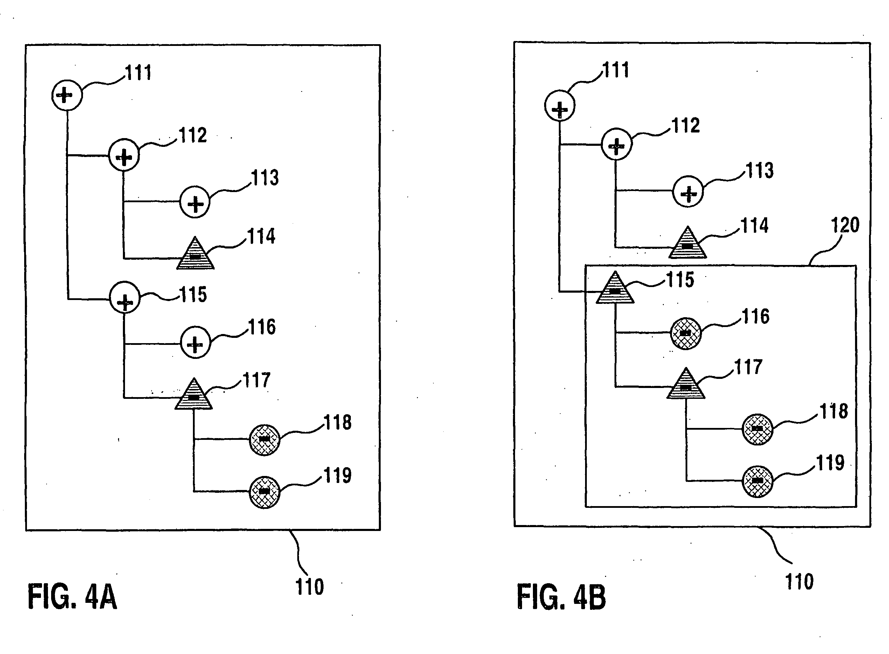

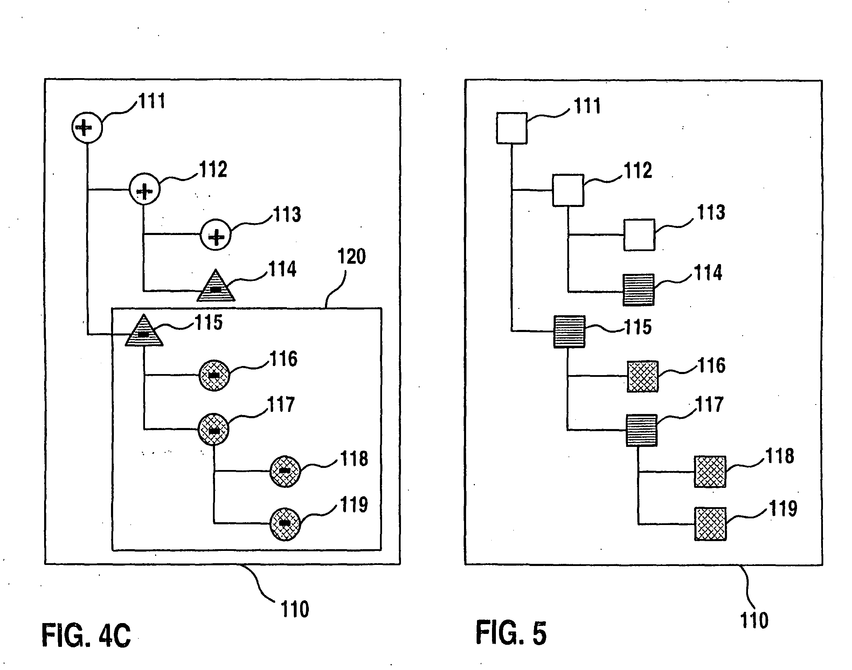

In FIG. 3A, propagation matrix 180 defines propagation rules to set propagation attribute 193 of a node (e.g. 115, cf. FIG. 4) in dependence of the propagation attribute 193 of the node's parent-node (PA(P), cf. row 180-10) and the control attribute 191 (CA(N), column 180-01) of the node. At any time, each attribute has one state from a set of predefined states. For convenience of explanation, FIGS. 3 to 5 illustrate states by graphical symbols.

In the example, CA(N) 191 has two control states 191-1, 191-2 (CS1, CS2). Different control states of control attribute 191 are illustrated by different shapes. CS1 corresponds to a circle and CS2 corresponds to a triangle. PA(P) 193 has two propagation states 193-1, 193-2 (PS1, PS2). Different propagation states of propagation attribute 193 are illustrated by different signs. PS1 corresponds to a plus (+) and PS2 corresponds to a minus (-). A person of skill in the art can implement the present invention with control attribute 191 having more than two control states and propagation attribute 193 having more than two propagation states.

In the example, propagation matrix 180 has rows 180-10, 180-20 and 180-30 and columns 180-01, 180-02 and 180-03. Row 180-10 refers to the propagation attribute 193 of the node's parent-node (e.g. 111) and comprises propagation state PS1 193-1 in column 180-02 and propagation state PS2 193-2 in column 180-03. Column 180-01 comprises control state CS1 191-1 of the node in row 180-20 and control state CS2 191-2 of the node in row 180-30. The further cells of propagation matrix 180 provide information about how the propagation attribute of the node PA(N) is set for each possible combination of the parent-node's propagation state and the node's control state.

The propagation rules that are defined by propagation matrix 180 for this example are now explained in detail referring to node 115 (cf. FIG. 4) as an example.

If node 115 has CA(N)=CS1 (180-21) and parent-node 111 has PA(P)=PS1 (180-12), that is when the Boolean expression CA(N)=CS1 AND PA(P)=PS1 is true, the propagation attribute 193 of node 115 (PA(N)) is set to PS1 (180-22). As used hereinafter, Boolean operators, such as AND, OR etc. are written in capital letters.

If node 115 has CA(N)=CS2 (180-31), PA(N) is set to PS2 (180-32, 180-33).

If parent-node 111 has PA(P)=PS2 (180-13), PA(N) is set to PS2 (180-23, 180-33).

In other words, in the example, PA(N) is PS1, only in case that all nodes in the path to node 115 have PS1 and node 115 has CS1. As a consequence, if CS1 and CS2 correspond to control states active and inactive, respectively, and PS1 and PS2 correspond to propagation states active and inactive, respectively, a node has the propagation state active when its control state is active and all nodes on its path have the propagation state active.

A person of skill in the art can implement further propagation rules to achieve further effects.

According to propagation matrix 180 the propagation attribute 193 of a node 180 depends on the propagation attribute of its parent-node. Therefore, propagation matrix 180 is not applicable to root-node 111 of tree 110. Preferably, but not limiting, for root-node 111 of tree 110 the following propagation rules are used:
if root-node 111 has control state CS1, the propagation attribute 193 of root-node 111 is set to PS1; and
if root-node 111 has control state CS2, the propagation attribute 193 of root-node 111 is set to PS2.

In FIG. 3B, display matrix 190 defines display rules to set display attribute 192 of a node DA(N) (e.g. 115, cf. FIG. 4) in dependence of the propagation attribute 193 (PA(N), cf. row 190-10) and the control attribute 191 (CA(N), column 190-01) of the node.

In the example, display attribute 192 has three display states 192-1, 192-2, 192-3 (DS1, DS2, DS3). Different display states of display attribute 192 are illustrated by different fill patterns. DS1 has a white pattern, DS2 has a bar pattern and DS3 has a grid pattern. A person of skill in the art can implement the present invention with display attribute 192 having more than three display states.

In the example, display matrix 190 has rows 190-10, 190-20 and 190-30 and columns 190-01, 190-02 and 190-03. Row 190-10 comprises propagation state PS1 in column 190-02 and propagation state PS2 in column 190-03 of a node (e.g. 115) of tree 110 (cf. FIG. 4). Column 190-01 comprises control state CS1 in row 190-20 and control state CS2 row 190-30 of the node (e.g. 115). The further cells of display matrix 190 provide information about the display attribute of the node DA(N) in dependence of the node's control attribute 191 CA(N) and propagation attribute 193 PA(N). The display rules that are defined by display matrix 190 for this example are now explained in detail referring to node 115 (cf. FIG. 4) as an example.

If node 115 has propagation state PA(N)=PS1 (190-12) AND control state CA(N)=CS1 (190-21), the display state of node 115 is set to DA(N)=DS1 (190-22).

If node 115 has propagation state PA(N)=PS2 (190-13) AND control state CA(N)=CS1 (190-21), the display state of node 115 is set to DA(N)=DS3 (190-23).

If node 115 has propagation state PA(N)=PS2 (190-13) and control state CA(N)=CS2 (190-31), the display state of node 115 is set to DA(N)=DS2 (190-33).

Cell 190-32 is crossed out because, in the example, according to row 180-30 of propagation matrix 180, a node having CS2 and PS1 is not allowed.

An advantage of this preferred embodiment of display matrix 190 is that the visualization of a node's display state allows the user to derive the control state and the propagation state of the node. For convenience of explanation, control states CS1 and CS2 stand for active and inactive, respectively. Propagation states PS1 and PS2 stand for active and inactive, respectively, and display states DS1, DS2 and DS3 stand for active, inactive and implicitly inactive, respectively.

In other words the content of display matrix 190 in the example can be described as follows (by using the previous definitions):
If node 115 has control state inactive, it always has display state inactive.
If node 115 has control state active, it has display state active if it has propagation state active (no inactive nodes in the node path).
If node 115 has control state active and propagation state inactive, it has display state implicitly inactive. This is the case, when an active node belongs to an inactive sub-tree. A sub-tree is inactive when at least one node in the path of the root-node of the sub-tree is inactive.

In FIG. 3C, further display matrix 200 defines alternative display rules to set display attribute 192 of a node (e.g. 115) in dependence of the control attribute 191 (CA(N), column 200-01) of the node and the display attribute 192 (DA(P), row 200-10) of the node's parent-node (e.g. 111). In this embodiment of the present invention the propagation attribute 193 is not relevant. The display attribute 192 DA(P) of the parent-node fulfils a propagation function.

As in FIG. 3B, in the example, display attribute 192 has three display states 192-1, 192-2, 192-3 (DS1, DS2, DS3). A person of skill in the art can implement the present invention with display attribute 192 having more than three display states.

In the example, further display matrix 200 has rows 200-10, 200-20 and 200-30 and columns 200-01, 200-02, 200-03 and'200-04. Row 200-10 comprises display states of the parent-node (e.g. 111) (DS1 in column 200-02, DS2 in column 200-03 and DS3 in column 200-03). Column 200-01 comprises control states of the node (e.g. 115) (CS1 in row 200-20 and CS2 in row 200-30). The further cells of display matrix 200 provide information about the display state of the node in dependence of its control attribute 191 CA(N) and the display attribute 192 DA(P) of the parent-node. The display rules that are defined by display matrix 200 for this example are now explained in detail referring to node 115 as an example.

If node 115 has control state CA(N)=CS1 (200-21) AND its parent-node 111 has display state DA(P)=DS1, the display state of node 115 is set to DA(N)=DS1 (200-22).

If node 115 has control state CA(N)=CS1 (200-21) AND its parent-node 111 has display state (DA(P)=DS2 (200-03) OR DA(P)=DS3 (200-04)), the display state of node 115 is set to DA(N)=DS3 (200-23, 200-24).

Otherwise, the display state of node 115 is set to DA(N)=DS2 (200-32, 200-33, 200-34).

An advantage of the preferred embodiment of display matrix 200 is that the display attribute of a node always allows the user (by looking at the graphical representation of the node's display state) to derive the corresponding control state of the node as well as a virtual propagation state of the node. For convenience of explanation, control states CS1 and CS2 stand for active and inactive, respectively. Display states DS1, DS2 and DS3 stand for active, inactive and implicitly inactive, respectively. The virtual propagation state of the node is inactive when the display state is inactive or implicitly inactive and it is active when the display state is active.

In other words, when the control attribute of a node is changed, the display rules defined by further display matrix 200 lead to the same display attribute adjustments as the display rules defined by the combination of propagation matrix 180 and display matrix 190. The user experiences the same advantages as with the embodiment described under FIGS. 3A, 3B.

According to further display matrix 200 display attribute 192 of a node 180 depends on the display attribute of its parent-node. Therefore, further display matrix 200 is not applicable to root-node 111 of tree 110. Preferably, but not limiting, for root-node 111 the following display rules are used:
if root-node 111 has control state CS1, the display attribute 192 of root-node 111 is set to DS1; and
if root-node 111 has control state CS2, the display attribute 192 of root-node 111 is set to DS2.

FIG. 4 illustrates tree 110 at three consecutive time points T1, T2, T3 (FIG. 4A, FIG. 4B, FIG. 4C), when the inventive computer system is operated according to the present invention.

FIG. 4A illustrates an example of predefined tree 110 at T1. Nodes 111, 112, 113, 115, 116, 118, 119 have CS1 (circle). Nodes 114, 117 have CS2 (triangle). Nodes 111, 112, 113, 115, 116 have PS1 (+). Nodes 114, 117, 118, 119 have PS2 (-). Nodes 111, 112, 113, 115, 116 have DS1 (white pattern). Nodes 114, 117 have DS2 (bar pattern) and nodes 118, 119 have DS3 (grid pattern). The states are in compliance with the propagation and display rules of propagation matrix 180 and display matrix 190 (cf. FIG. 3) as well as with the alternative display rules of further display matrix 200 (cf. FIG. 3).

FIG. 4B illustrates tree 110 at T2, wherein control attribute 191 of node 115 is changed from CS1 (circle) to CS2 (triangle). Node 115 is the root-node of sub-tree 120. According to propagation rule 180-32 the propagation state of node 115.changes from PS1 (+) to PS2 (-). According to propagation rule 180-23 the propagation state of node 116 changes from PS1 (+) to PS2 (-). According to propagation rules 180-23 and 180-33, the propagation states of nodes 117, 118, 119 remain unchanged (PS2). In the example, by changing the control attribute 191 of root-node 115 to CS2 (inactive) the propagation attribute 193 of all further nodes in sub-tree 120 is set to PS2 (inactive). This illustrates, that the propagation rules are defined to deactivate a whole sub-tree, when its root-node gets deactivated. In this example, none of the nodes of sub-tree 120 can be executed anymore by a corresponding application, although some of the nodes (116, 118, 119) still have control attribute CS1 (active). A person of skill in the art can choose other rule sets to achieve other effects.

For example, each node in tree 110 stands for an URL (unique resource locator). PS1/PS2 indicate that user access to the corresponding URL is allowed (+) / denied (-). By setting control attribute 191 of node 115 to CS2 (inactive), user access to all nodes of sub-tree 120 is disabled via the propagation attribute 193. However, control attribute 191 of nodes 116, 118, 119 is still CS1 (active). Therefore, according to display matrix 190 (cf. FIG. 3), computer system 999 sets display attribute 192 of nodes 116, 118, 119 to DS3 (implicitly inactive). Preferably, the propagation attribute of root-node 115 at the first hierarchy level of sub-tree 120 is propagated to sub-nodes 116, 117 at the second hierarchy level of sub-tree 120. Then, propagation attribute of sub-node 117 is propagated to sub-nodes 118, 119 at the third hierarchy level of sub-tree 120.

The display states of nodes 115-119 of tree 110 at T2 can also be explained by using further display matrix 200 (cf. FIG. 3C). In this case the propagation attribute (+, -) is not relevant (only virtual). Propagation occurs via the display rules that depend on the display status of the parent-node. Display attribute 192 of node 115 is set to DS2 according to display rule 200-32. Display attribute 192 of node 116 is set to DS3 according to display rule 200-23. The display attribute 192 of nodes 117-119 remains unchanged according to display rules 200-33 (for 117) and 200-23 (for 118, 119).

FIG. 4C illustrates tree 110 at T3 and shows how the user can use the present invention as a tree-"preview function" to predict in advance the states of the nodes of tree 110 after the change of the control attribute 191 of a node. Control attribute 191 of node 117 is changed from CS2 (triangle) to CS1 (circle). According to propagation rule 180-23 the propagation attribute 193 of node 117 remains PS2 (-). At T3 all nodes of sub-tree 120 have propagation attribute PS2 (-, inactive) but only the root-node 115 of sub-tree 120 has control attribute CS2 (triangle, inactive). According to display rule 190-23, the display attribute 192 is set to DS3 (bar, implicitly inactive) for nodes 116-119. The user now recognizes that, when changing the control attribute 191 of root-node 115 from CS2 (triangle, inactive) to CS1 (circle, active), sub-tree 120 would be completely reactivated, because its sub-nodes were implicitly inactive (induced inactivity through the propagation state PS2 inherited from node 115). Therefore, the example shows how the user can prepare sub-tree 120 for reactivation through a single control attribute change of node 115, while still keeping the sub-tree 120 inactive. This is an advantage over prior art systems, where the reactivation has to be done manually node by node while the sub-tree 120 is active (that is, the root-node of sub-tree 120 is active). Moreover, further sub-trees within a sub-tree can be permanently deactivated via appropriate propagation rules by setting the control state of the corresponding root-node to CS2 (inactive).

The display states of nodes 117-119 in the third state of tree 110 can also be explained by using further display matrix 200. Display attribute 192 of node 117 is set to DS3 (bar) according to display rule 200-23. The display attribute 192 of nodes 118, 119 remains unchanged (DS3) according to display rule 200-24.

FIG. 5 illustrates an example of an inventive screen view of display device 950 that displays tree 110 according to the present invention.

The screen view refers to time point T2 described under FIG. 4B. Having a corresponding graphical representation of control attribute (shape), display attribute (fill pattern) and propagation attribute (sign) might be inconvenient or confusing for the user.

Therefore, FIG. 5 illustrates a visualization of tree 110, wherein the graphical representations of the control attribute 191 or propagation attribute 193 are not shown the display device 950 (cf. FIG. 2). In the example, the nodes of tree 110 only show the graphical representation of display attribute 192. For the user the full information is still available because, the computer system implicitly indicates control attribute 191 and propagation attribute 193 (or a virtual propagation attribute) via display attribute 192 according to the rules of display matrix 180, propagation matrix 190 or further display matrix 200.

In the following, the present invention is described as computer implemented methods 400, 500 and 600. The steps performed by the inventive methods can be described by the code of a computer program product 100 (cf. FIG. 1) in any programming language. CPP 100 is embodied by data carrier 970 (cf. FIG. 1) or carried by signal 980 (cf. FIG. 1). CPP 100 has a plurality of computer program instructions (program code) to cause processor 910 (cf. FIG. 1) of computer 900 to execute the corresponding steps. A person of skill in the art can implement the inventive methods also by executing the steps on multiple processors (e.g. 910, 911) of multiple computers (e.g. 900, 901) of computer system 999. For example, in a client-server system 999 (cf. FIG. 1) parts of CPP 100 run on application computer 901 (e.g. the retrieval of hierarchy data from an application database) and parts of CPP 100 run on client computer 900 (e.g. the display of tree 110 on display device 950). It is not important for the invention, where the hierarchy data are stored. Preferably, the hierarchy data are stored in memory 921 of application computer 901 or in memory 920 of client computer 900 (cf. FIGS. 1, 2).

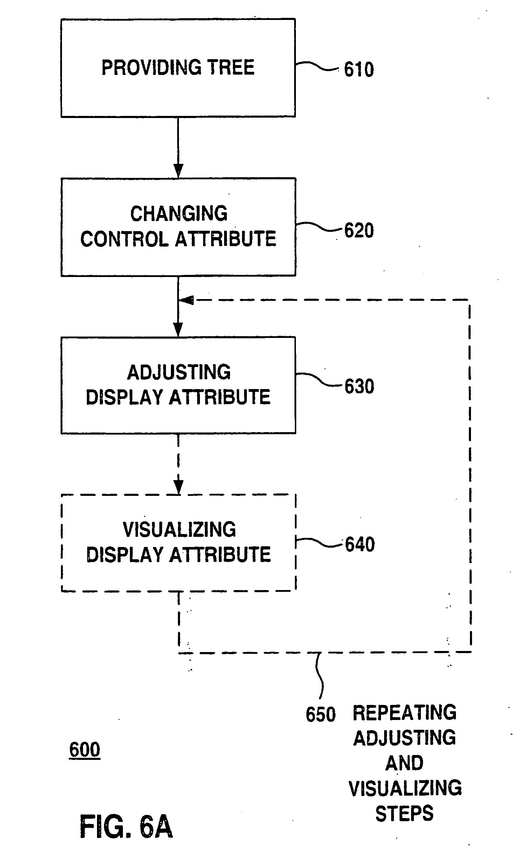

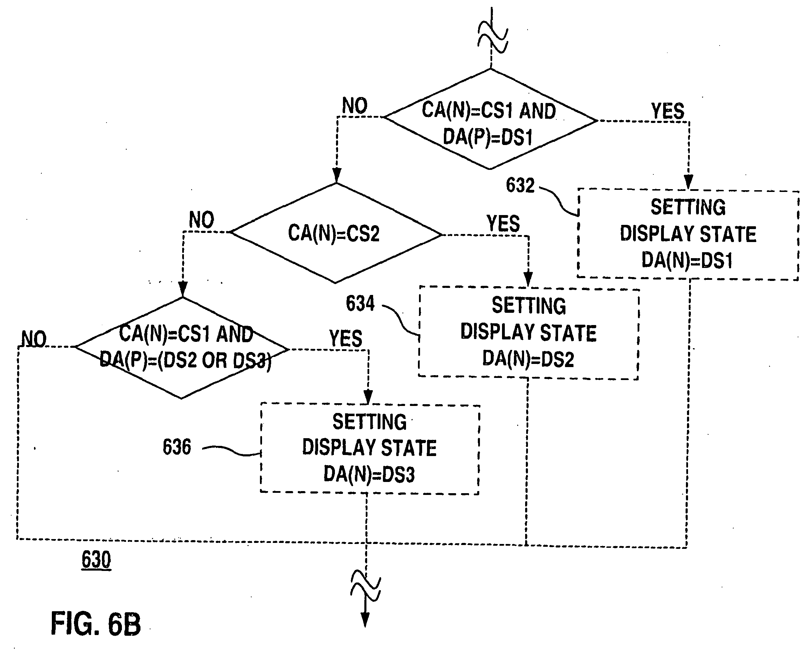

FIG. 6 illustrates simplified flow charts of inventive method 600.

FIG. 6A illustrates details of method 600 for adjusting display states of tree-nodes. Method 600 comprises the steps: providing tree 610, changing control attribute 620 and adjusting display attribute 630. Optionally, method 600 further comprises the steps visualizing display attribute 640 and repeating 650 adjusting and visualizing steps. The steps are now explained in detail.

In the providing tree 610 step, computer system 999 provides predefined hierarchy data that are preferably visualized as predefined tree 110 on display device 950 of client computer 900 (cf. FIG. 2). Tree 110 has a plurality of nodes 111-119, wherein each node has a predefined control attribute 191 and a predefined display attribute 192. For example control attribute 191 has control state CS1 or CS2 (cf. FIG. 3) and display attribute 192 has display state DS1, DS2 or DS3 (cf. FIG.3).

In the changing control attribute 620 step, computer system 999 changes control attribute 191 of node 115. For example control attribute 191 changes from control state CS1 (cf. FIG 4A) to control state CS2 (cf. FIG. 4B). In the example, node 115 defines sub-tree 120 (cf. FIG. 4B) of tree 110 and is the root-node of sub-tree 120.

In the example, node 115 has parent-node 111. In the adjusting display attribute 630 step, computer system 999 adjusts 630 display attribute 192 of node 115 with respect to control attribute 191 of node 115 and display attribute 192 of parent-node 111. The adjustment of display attribute 192 of node 115 is performed in accordance with predefined display rules. Preferably, the predefined display rules are embodied in display matrix 200 (cf. FIG. 3C). For example, display matrix 200 can be stored as a table in a memory (e.g. 920, 921) of computer system 999. A person of skill in the art can choose an alternative embodiment of the display rules, such as a description of the rules by using program code.

In the optional visualizing display attribute 640 step, computer system 999. uses user interface 960 to visualize a specific graphical representation of display attribute 192 of node 115. It is not important for the invention, which type of graphical representation is used for display attribute 192. Some examples for different types of graphical representations of display attribute 192 are listed below:
a) node shape (e.g. DS1/circle, DS2/triangle, DS3/square);
b) node colour (e.g. DS1/green, DS2/red, DS3/yellow);
c) node fill-pattern (e.g. DS1/white, DS2/bar, DS3/grid; cf. FIG. 3C);
d) node animation (e.g. DS1/permanent, DS2/scrolling, DS3/blinking).

Other types are possible. Preferably, the user can choose the type that is most convenient to him or her.

In the example, node 115 defines sub-tree 120 (cf. FIG. 4B) of tree 110. 3. In the optional repeating adjusting and visualizing step 650, computer system 999 repeats the adjusting 630 and visualizing 640 steps for each sub-node 116-119 of sub-tree 120.

FIG. 6B illustrates optional steps 632, 634, 636 of adjusting display attribute 630 step to set display attribute 192 of node 115 in accordance with the display rules of display matrix 200. For convenience of explanation the optional steps are shown in a flow chart diagram. However, the order in which the steps are executed, is not important for the invention. The optional steps are now explained in detail. Preferably, but not limiting, computer system 999:
a) sets 632 display attribute 192 of node 115 to first display state 192-1, if control attribute 191 of node 115 has first control state 191-1 AND display attribute 192 of parent-node 111 has first display state 192-1 (rule 200-22);
b) sets 634 display attribute 192 of node 115 to second display state 192-2, if control attribute 191 of node 115 has second control state 191-1 (rules 200-32, 200-33, 200-34); and
c) sets 636 display attribute 192 of node 115 to third display state 192-3, if control attribute 191 of node 115 has first control state 191-1 AND (display attribute 192 of parent-node 111 has second display state 192-2 (rule 200-23) OR third display state 192-3 (rule 200-24)), that is, when the Boolean expression CA(N)=CS1 AND (DA(P)=DS2 OR DA(P)=DS3) is true.

As explained in the example of FIG. 3, control states CS1 191-1 and CS2 191-2 can stand for active and inactive, respectively. Display states DS1 192-1, DS2 192-2 and DS3 192-2 can stand for active, inactive and implicitly inactive, respectively.

FIG. 7 illustrates simplified flow charts of inventive method 500. Method 500 describes the embodiment of the invention that uses the propagation attribute 193.

FIG. 7A illustrates details of method 500 for adjusting display states of tree-nodes. Method 500 comprises the steps: providing tree 510, changing control attribute 520, calculating propagation attribute 530 and adjusting display attribute 540. The steps are now explained in detail.

The providing tree 510 step of method 500 is equivalent to the providing tree 410 step of method 400.

In the changing control attribute 520 step, computer system 999 changes control attribute 191 of node 115. Preferably, the request to change the control attribute comes from the user via user interface 960 of computer 900. Alternatively, the request can be launched by any other computer (e.g. 901) of computer system 999. Preferably, node 115 defines sub-tree 120 of tree 110.

In the calculating propagation attribute 530 step, computer system 999 calculates propagation attribute 193 for each node 115-119 of sub-tree 120 according to predefined propagation rules 180. Preferably, the propagation rules are implemented via propagation matrix 180 (cf. FIG. 3A) in the form of a table or program code. It is not important for the invention where the propagation rules are stored. Preferably, they are stored in the memory of any of the computers of computer system 999.

In the adjusting the display attribute 540 step, computer system 999 adjusts display attribute 192 of each node 115-119 of sub-tree with respect to the nodes' control attributes 191 and propagation attributes 193 according to predefined display rules 190. Preferably, the display rules are implemented via display matrix 190 (cf. FIG. 3B) in the form of a table or program code. It is not important for the invention where the display rules are stored. Preferably, they are stored in the memory of any of the computers of computer system 999.

In a preferred embodiment of the invention, propagation rules 180 and display rules 190 complement each other in such a way that display attribute 192 of a node allows the user to clearly distinguish nodes with respect to their control attribute 191 and propagation attribute 193. Therefore, it is sufficient for computer system 999 to visualize the display attribute 192 to indicate to the user how the tree behaves, when the control attribute of any of the nodes 111-119 is changed.

FIG. 7B illustrates optional steps 532, 534 of calculating propagation attribute 530 step to set propagation attribute 193 of node 115 in accordance with the propagation rules of propagation matrix 180. Each node 115-119 of sub-tree 120 has a parent-node. For convenience of explanation the optional steps are shown in a flow chart diagram. However, the order in which the steps are executed, is not important for the invention. The optional steps are now explained in detail. Preferably, but not limiting, computer system 999 for each node 115-119 of sub-tree 120:
sets 532 propagation attribute 193 of node 115 to first propagation state 193-1, if control attribute 191 of node 115 has first control state 191-1 AND propagation attribute 193 of parent-node 111 has first propagation state 193-1; and
sets 534 propagation attribute 193 of node 115 to second propagation state 193-2, if control attribute 191 of the node 115 has second control state 191-2 OR if propagation attribute 193 of parent-node 111 has second propagation state 193-2.

As a consequence, in the example the propagation attribute 193 of a node has first propagation state 193-1 (e.g. active) only, if all nodes on the path to the node have first control state 191-1 (e.g. active). Other combinations lead to second propagation state 193-2 (e.g. inactive).

FIG. 7C illustrates optional steps 542, 544, 546 of adjusting display attribute 540 step to set display attribute 192 of node 115 in accordance with the display rules of display matrix 190. For convenience of explanation the optional steps are shown in a flow chart diagram. However, the order in which the steps are executed, is not important for the invention. The optional steps are now explained in detail. Preferably, but not limiting, computer system 999 repeats for each node 115-119 of sub-tree 120:
setting 542 display attribute 192 of the node to first display state 192-1, if control attribute 191 of node has first control state 191-1 AND propagation attribute 193 of the node has first propagation state 193-1;
setting 544 display attribute 192 of the node to second display state 192-2, if control attribute 191 of the node has second control state 191-2 AND propagation attribute 193 of the node 115 has second propagation state 193-2; and
setting 546 display attribute 192 of the node to third display state 192-3, if control attribute 191 of the node 115 has first control state 191-1 AND propagation attribute 193 of the node 115 has second propagation state 193-2.

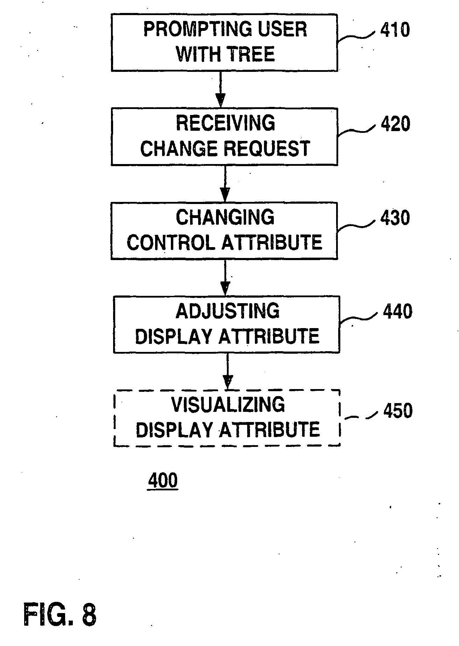

For example, first display state 192-1 (e.g. active) indicates first control state 191-1 (e.g. active) and first propagation state 193-1 (e.g. active). Second display state 192-2 (e.g. inactive) indicates second control state 191-2 (e.g. inactive) and second propagation state 193-2 (e.g. inactive). Third display state 192-2 (e.g. implicitly inactive) indicates first control state 191-1 (e.g. active) and second propagation stat 193-2 (e.g. inactive). FIG. 8 illustrates a simplified flow chart of inventive method 400 for adjusting display states of tree-nodes. Method 400 describes the interaction of the user with the inventive computer system, which is operated according to method 600.

Method 400 comprises the steps: prompting user with tree 410, receiving change request 420, changing control attribute 430 and adjusting display attribute 440. Optionally, method 400 further comprises the step visualizing display attribute 450. The steps are now explained in detail.

In the prompting user with tree 410 step, computer system 999 displays predefined tree 110 to the user via user interface 960. Tree 110 is provided as described in the providing step 610 of method 600 (cf. FIG. 6).

In the receiving change request 420 step, computer system 999 receives a request from the user to change control attribute 191 of node 115. Preferably, the user launches the request via user interface 960. Node 115 defines sub-tree 120 of tree 110.

In the changing control attribute 430 step, computer system 999 changes control attribute 191 of node 115 according to the request of the user as described in changing step 620 of method 600.

In the adjusting display attribute 440 step, computer system 999 adjusts display attribute 192 of each node 115-119 of sub-tree 120 with respect to control attribute 191 of each node 115-119 and display attribute 192 of each node's 115-119 parent-node according to predefined display rules 200.

In the optional visualizing 450 step, computer system 999 visualizes display attribute 192 of each node 111-119 of tree 110.

Steps 430 to 450 are equivalent to steps 620 to 650 of method 400 and provide the same advantages to the user as described under FIG. 6.

| **Reference** | **Description** |
|---|---|
| 100 | Computer program product |
| 110 | Tree |
| 120 | Sub-tree |
| 111-119 | Tree nodes |
| 180 | Propagation matrix |
| 180-xx | Elements of propagation matrix |
| 190, 200 | Display matrices |
| 190-xx, 200-xx | Elements of display matrices |
| 191 | Control display of a node |
| 191-x | Control states |
| 192 | Display attribute of a node |
| 192-x | Display states |
| 193 | Propagation attribute of a node |
| 193-x | Propagation states |
| 400, 500, 600 | Methods |
| 4xx, 5xx, 6xx | Method steps |
| 999 | Computer system |
| 900, 901 | Computers |
| 910, 911 | Processors |
| 920, 921 | Memories |
| 930, 930-1, 930-2 | Bus |
| 940 | Input device |
| 950 | Output device |
| 951 | Cursor |
| 960 | User interface |
| 970 | Program carrier (data carrier) |
| 980 | Program signal |

## Claims

1. A computer-implemented method (500), the method (500) comprising the following steps:
providing (510) a predefined tree (110), the tree (110) having a plurality of nodes (111-119) wherein each node has a predefined propagation attribute (193), a predefined control attribute (191) and a predefined display attribute (192);
changing (520) the control attribute (191) of a node (115), wherein the node (115) defines a sub-tree (120) of the tree (110); each node of the sub-tree (120) having a parent-node;
calculating (530) the propagation attribute (193) of each node (115-119) of the sub-tree (120) depending on the node's control attribute (191) and the propagation attribute (193) of the corresponding parent-node according to predefined propagation rules (180);
adjusting (540) the display attribute (192) of each node (115-119) of the sub-tree with respect to the node's control attribute (191) and the node's propagation attribute (193) according to predefined display rules (190); and
visualizing a specific graphical representation of display attribute (192) of node (115).

2. The method (500) of claim 1, wherein for each node (115-119) of the sub-tree (120) the calculating propagation attribute (530) step repeats the following steps:
setting (532) the propagation attribute (193) of the node (115) to a first propagation state (193-1), if the control attribute (191) of the node (115) has a first control state (191-1) and the propagation attribute (193) of the node's (115) parent-node (111) has the first propagation state (193-1); and
otherwise, setting (534) the propagation attribute (193) of the node (115) to a second propagation state (193-2).

3. The method (500) of claim 2, wherein the adjusting display attribute (540) step repeats for each node (115-119) of the sub-tree (120) the following steps:
setting (542) the display attribute (192) of the node (115) to a first display state (192-1) if the control attribute (191) of the node (115) has the first control state (191-1) and the propagation attribute (193) of the node (115) has the first propagation state (193-1);
setting (544) the display attribute (192) of the node (115) to a second display state (192-2), if the control attribute (191) of the node (115) has the second control state (191-2) and the propagation attribute (193) of the node (115) has the second propagation state (193-2); and
setting (546) the display attribute (192) of the node (115) to a third display state (192-3), if the control attribute (191) of the node (115) has the first control state (191-1) and the propagation attribute (193) of the node (115) has the second propagation state (193-2).

4. The method (500) of claim 1, wherein the control attribute (191) of a node has a control state from the group of active (191-1) and inactive (191-2).

5. The method (500) of claim 1, wherein the propagation attribute (193) of a node has a propagation state from the group of active (193-1) and inactive (193-2).

6. The method (500) of claim 1, wherein the display attribute of a node has a display state from the group of active (192-1), inactive (192-2) and implicitly inactive (192-3).

7. A computer program product (100), embodied by a data carrier (970) or carried by a signal (980) the computer program product (100) having a plurality of instructions for causing at least one processor (910) of at least one computer (900) to execute the following steps:
providing (510) a predefined tree (110), the tree (110) having a plurality of nodes (111-119), wherein each node has a predefined propagation attribute (193), a predefined control attribute (191) and a predefined display attribute (192);
changing (520) the control attribute (191) of a node (115), wherein the node (115) defines a sub-tree (120) of the tree (110); each node of the sub-tree (120) having a parent-node;
calculating (530) the propagation attribute (193) of each node (115-119) of the sub-tree (120) depending on the node's control attribute (191) and the propagation attribute (193) of the corresponding parent-node according to predefined propagation rules (180);
adjusting (540) the display attribute (192) of each node (115-119) of the sub-tree with respect to the node's control attribute (191) and the node's propagation attribute (193) according to predefined display rules (190); and
visualizing a specific graphical representation of display attribute (192) of node (115).

8. The computer program product (100) of claim 7, causing the at least one processor (910) to execute the calculating propagation attribute (530) step by repeating for each node (115-119) of the sub-tree (120) the following steps:
setting (532) the propagation attribute (193) of the node (115) to a first propagation state (193-1), if the control attribute (191) of the node (115) has a first control state (191-1) and the propagation attribute (193) of the node's (115) parent-node (111) has the first propagation state (193-1); and
otherwise, setting (534) the propagation attribute (193) of the node (115) to a second propagation state (193-2).

9. The computer program product (100) of claim 8, causing the at least one processor (910) to execute the adjusting display attribute (540) step by repeating for each node (115-119) of the sub-tree (120) the following steps:
setting (542) the display attribute (192) of the node (115) to a first display state (192-1) if the control attribute (191) of the node (115) has the first control state (191-1) and the propagation attribute (193) of the node (115) has the first propagation state (193-1);
setting (544) the display attribute (192) of the node (115) to a second display state (192-2), if the control attribute (191) of the node (115) has the second control state (191-2) and the propagation attribute (193) of the node (115) has the second propagation state (193-2); and
setting (546) the display attribute (192) of the node (115) to a third display state (192-3), if the control attribute (191) of the node (115) has the first control state (191-1) and the propagation attribute (193) of the node (115) has the second propagation state (193-2).

10. A computer system (999) comprising at least a computer (900); the computer (900) providing (510) a predefined tree (110); the tree (110) having a plurality of nodes (111-119) wherein each node has a predefined propagation attribute (193), a predefined control attribute (191) and a predefined display attribute (192); the computer (900) further changing (520) the control attribute (191) of a node (115), wherein the node (115) defines a sub-tree (120) of the tree (110); each node of the sub-tree (120) having a parent-node;
the computer (900) calculating (530) the propagation attribute (193) of each node (115-119) of the sub-tree (120) depending on the control attribute (193) of the node and the propagation attribute of the node's parent-node according to predefined propagation rules (180);
the computer adjusting (540) the display attribute (192) of each node (115-119) of the sub-tree (120) with respect to the control attribute (191) of the node and the propagation attribute (193) of the node according to predefined display rules (190); and
the computer (900) using a user interface (960) to visualize a specific graphical representation of display attribute (192) of node (115).

## Patentansprüche

1. Computer implementiertes Verfahren (500), wobei das Verfahren (500) die folgenden Schritte umfasst:
Bereitstellen (510) eines vordefinierten Baums (110), wobei der Baum (110) ein Vielzahl von Knoten (111-119) aufweist, wobei jeder Knoten ein vordefiniertes Weitergabeattribut (193), ein vordefiniertes Steuer- bzw. Kontrollattribut (191) und ein vordefiniertes Anzeigeattribut (192) aufweist;
Ändern (520) des Kontrollattributs (191) eines Knotens (115), wobei der Knoten (115) einen Unterbaum bzw. Teilbaum (120) des Baums (110) definiert und jeder Knoten des Unterbaums (120) einen Elternknoten aufweist;
Berechnen (530) des Weitergabeattributs (193) für jeden Knoten (115-119) des Unterbaums (120) abhängig von dem Kontrollattribut (191) des Knotens und dem Weitergabeattribut (193) des entsprechenden Elternknotens gemäß vordefinierter Weitergaberegeln (180);
Abgleichen bzw. Anpassen bzw. Einstellen (540) des Anzeigeattributs (192) für jeden Knoten (115-119) des Unterbaums hinsichtlich des Kontrollattributs (191) des Knotens und des Weitergabeattributs (193) des Knotens gemäß vordefinierter Anzeigeregeln (190); und
Visualisieren einer spezifischen grafischen Darstellung des Anzeigeattributs (192) des Knotens (115).

2. Verfahren (500) nach Anspruch 1, wobei für jeden Knoten (115-119) des Unterbaums (120) der Weitergabeattribut-Berechnungsschritt (530) die folgenden Schritte wiederholt:
Setzen (532) des Weitergabeattributs (193) des Knotens (115) auf einen ersten Weitergabestatus (193-1), wenn das Kontrollattribut (191) des Knotens (115) einen ersten Kontrollstatus (191-1) aufweist und das Weitergabeattribut (193) des Elternknotens (111) des Knotens (115) den ersten Weitergabestatus (193-1) aufweist; und
ansonsten, Setzen (534) des Weitergabeattributs (193) des Knotens (115) auf einen zweiten Weitergabestatus (193-2).

3. Verfahren (500) nach Anspruch 2, wobei der Anzeigeattribut-Abgleichschritt (540) für jeden Knoten (115-119) des Unterbaums (120) die folgenden Schritte wiederholt:
Setzen (542) des Anzeigeattributs (192) des Knotens (115) auf einen ersten Anzeigestatus (192-1), wenn das Kontrollattribut (191) des Knotens (115) den ersten Kontrollstatus (191-1) aufweist und das Weitergabeattribut (193) des Knotens (115) den ersten Weitergabestatus (193-1) aufweist;
Setzen (544) des Anzeigeattributs (192) des Knotens (115) auf einen zweiten Anzeigestatus (192-2), wenn das Kontrollattribut (191) des Knotens (115) den zweiten Kontrollstatus (191-2) aufweist und das Weitergabeattribut (193) des Knotens (115) den zweiten Weitergabestatus (193-2) aufweist; und
Setzen (546) des Anzeigeattributs (192) des Knotens (115) auf einen dritten Anzeigestatus (192-3), wenn das Kontrollattribut (191) des Knotens (115) den ersten Kontrollstatus (191-1) aufweist und das Weitergabeattribut (193) des Knotens (115) den zweiten Weitergabestatus (193-2) aufweist.

4. Verfahren (500) nach Anspruch 1, wobei das Kontrollattribut (191) eines Knotens einen Kontrollstatus aus der Gruppe aktiv (191-1) und inaktiv (191-2) aufweist.

5. Verfahren (500) nach Anspruch 1, wobei das Weitergabeattribut (193) eines Knotens einen Weitergabestatus aus der Gruppe aktiv (193-1) und inaktiv (193-2) aufweist.

6. Verfahren (500) nach Anspruch 1, wobei das Anzeigeattribut eines Knotens einen Anzeigestatus aus der Gruppe aktiv (192-1), inaktiv (192-2) und implizit inaktiv (192-3) aufweist.

7. Computerprogramm-Produkt (100), welches in einem Datenträger (970) enthalten ist oder von einem Signal (980) übertragen wird, wobei das Computerprogramm-Produkt (100) ein Vielzahl von Befehlen aufweist, um zumindest einen Prozessor (910) zumindest eines Computers (900) dazu zu veranlassen, die folgenden Schritte auszuführen:
Bereitstellen (510) eines vordefinierten Baums (110), wobei der Baum (110) in Vielzahl von Knoten (111-119) aufweist, wobei jeder Knoten ein vordefiniertes Weitergabeattribut (193), ein vordefiniertes Steuer- bzw. Kontrollattribut (191) und ein vordefiniertes Anzeigeattribut (192) aufweist;
Ändern (520) des Kontrollattributs (191) eines Knotens (115), wobei der Knoten (115) einen Unterbaum bzw. Teilbaum (120) des Baums (110) definiert und jeder Knoten des Unterbaums (120) einen Elternknoten aufweist;
Berechnen (530) des Weitergabeattributs (193) für jeden Knoten (115-119) des Unterbaums (120) abhängig von dem Kontrollattribut (191) des Knotens und dem Weitergabeattribut (193) des entsprechenden Elternknotens gemäß vordefinierten Weitergaberegeln (180);
Abgleichen bzw. Anpassen bzw. Einstellen (540) des Anzeigeattributs (192) für jeden Knoten (115-119) des Unterbaums hinsichtlich des Kontrollattributs (191) des Knotens und des Weitergabeattributs (193) des Knotens gemäß vordefinierter Anzeigeregeln (190); und
Visualisieren einer spezifischen grafischen Darstellung des Anzeigeattributs (192) des Knotens (115).

8. Computerprogramm-Produkt (100) gemäß Anspruch 7, welches den zumindest einen Prozessor (910) dazu veranlasst, den Weitergabeattribut-Berechnungsschritt (530) auszuführen indem für jeden Knoten (115-119) des Unterbaums (120) die folgenden Schritte wiederholt werden:
Setzen (532) des Weitergabeattributs (193) des Knotens (115) auf einen ersten Weitergabestatus (193-1), wenn das Kontrollattribut (191) des Knotens (115) einen ersten Kontrollstatus (191-1) aufweist und das Weitergabeattribut (193) des Elternknotens (111) des Knotens (115) den ersten Weitergabestatus (193-1) aufweist; und
ansonsten, Setzen (534) des Weitergabeattributs (193) des Knotens (115) auf einen zweiten Weitergabestatus (193-2).

9. Computerprogramm-Produkt (100) gemäß Anspruch 8, welches den zumindest einen Prozessor (910) dazu veranlasst, den Anzeigeattribut-Abgleichschritt (540) auszuführen indem für jeden Knoten (115-119) des Unterbaums (120) die folgenden Schritte wiederholt werden:
Setzen (542) des Anzeigeattributs (192) des Knotens (115) auf einen ersten Anzeigestatus (192-1), wenn das Kontrollattribut (191) des Knotens (115) den ersten Kontrollstatus (191-1) aufweist und das Weitergabeattribut (193) des Knotens (115) den ersten Weitergabestatus (193-1) aufweist;
Setzen (544) des Anzeigeattributs (192) des Knotens (115) auf einen zweiten Anzeigestatus (192-2), wenn das Kontrollattribut (191) des Knotens (115) den zweiten Kontrollstatus (191-2) aufweist und das Weitergabeattribut (193) des Knotens (115) den zweiten Weitergabestatus (193-2) aufweist; und
Setzen (546) des Anzeigeattributs (192) des Knotens (115) auf einen dritten Anzeigestatus (192-3), wenn das Kontrollattribut (191) des Knotens (115) den ersten Kontrollstatus (191-1) aufweist und das Weitergabeattribut (193) des Knotens (115) den zweiten Weitergabestatus (193-2) aufweist.

10. Computersystem (999), welches zumindest einen Computer (900) umfasst; wobei der Computer (900) einen vordefinierten Baum (110) bereitstellt; wobei der Baum (110) eine Vielzahl von Knoten (111-119) aufweist, wobei jeder Knoten ein vordefiniertes Weitergabeattribut (193), ein vordefiniertes Steuer- bzw. Kontrollattribut (191) und ein vordefiniertes Anzeigeattribut (192) aufweist; wobei der Computer (900) das Kontrollattribut (191) eines Knotens (115) weiter verändert, wobei der Knoten (115) einen Unterbaum bzw. Teilbaum (120) des Baums (110) definiert; wobei jeder Knoten des Unterbaums (120) einen Elternknoten aufweist;
wobei der Computer (900) das Weitergabeattribut (193) für jeden Knoten (115-119) des Unterbaums (120) berechnet abhängig von dem Kontrollattribut (193) des Knotens und dem Weitergabeattribut des Elternknotens des Knotens gemäß vordefinierter Weitergaberegeln (180);
wobei der Computer das Anzeigeattribut (192) für jeden Knoten (115-119) des Unterbaums (120) hinsichtlich des Kontrollattributs (191) des Knotens und des Weitergabeattributs (193) des Knotens abgleicht gemäß vordefinierter Weitergaberegeln (190); und
wobei der Computer (900) eine Benutzerschnittstelle (960) verwendet, um eine spezifische grafische Darstellung des Anzeigeattributs (192) des Knotens (115) zu visualisieren.

## Revendications

1. Procédé implémenté par ordinateur (500), le procédé (500) comprenant les étapes suivantes :
la fourniture (510) d'une arborescence prédéfinie (110), l'arborescence (110) ayant une pluralité de noeuds (111-119), opération pendant laquelle chaque noeud a un attribut de propagation prédéfini (193), un attribut de contrôlé prédéfini (191) et un attribut d'affichage prédéfini (192) ;
la modification (520) de l'attribut de contrôle (191) d'un noeud (115), opération pendant laquelle le noeud (115) définit une sous-arborescence (120) de l'arborescence (110), chaque noeud de la sous-arborescence (120) ayant un noeud apparenté ;
le calcul (530) de l'attribut de propagation (193) de chaque noeud (115-119) de la sous-arborescence (120) en fonction de l'attribut de contrôle (191) du noeud et de l'attribut de propagation (193) du noeud apparenté correspondant conformément à des règles de propagation prédéfinies (180) ;
le réglage (540) de l'attribut d'affichage (192) de chaque noeud (115-119) de la sous-arborescence par rapport à l'attribut de contrôle (191) du noeud et à l'attribut de propagation (193) du noeud conformément à des règles d'affichage prédéfinies (190) ; et
la visualisation d'une représentation graphique spécifique de l'attribut d'affichage (192) du noeud (115).

2. Procédé (500) selon la revendication 1, dans lequel pour chaque noeud (115-119) de la sous-arborescence (120), l'étape de calcul de l'attribut de propagation (530) répète les étapes suivantes :
la mise au point (532) de l'attribut de propagation (193) du noeud (115) sur un premier état de propagation (193-1) si l'attribut de contrôle (191) du noeud (115) a un premier état de contrôle (191-1) et l'attribut de propagation (193) du noeud apparenté (111) du noeud (115) a le premier état de propagation (193-1) ; et
sinon, la mise au point (534) de l'attribut de propagation (193) du noeud (115) sur un deuxième état de propagation (193-2).

3. Procédé (500) selon la revendication 2, dans lequel l'étape de réglage de l'attribut d'affichage (540) répète pour chaque noeud (115-119) de la sous-arborescence (120) les étapes suivantes :
la mise au point (542) de l'attribut d'affichage (192) du noeud (115) sur un premier état d'affichage (192-1) si l'attribut de contrôle (191) du noeud (115) a le premier état de contrôle (191-1) et l'attribut de propagation (193) du noeud (115) a le premier état de propagation (193-1) ;
la mise au point (544) de l'attribut d'affichage (192) du noeud (115) sur un deuxième état d'affichage (192-2) si l'attribut de contrôle (191) du noeud (115) a le deuxième état de contrôle (191-2) et l'attribut de propagation (193) du noeud (115) a le deuxième état de propagation (193-2) ; et
la mise au point (546) de l'attribut d'affichage (192) du noeud (115) sur un troisième état d'affichage (192-3) si l'attribut de contrôle (191) du noeud (115) a le premier état de contrôle (191-1) et l'attribut de propagation (193) du noeud (115) a le deuxième état de propagation (193-2).

4. Procédé (500) selon la revendication 1, dans lequel l'attribut de contrôle (191) d'un noeud a un état de contrôle parmi le groupe d'actif (191-1) et d'inactif (191-2).

5. Procédé (500) selon la revendication 1, dans lequel l'attribut de propagation (193) d'un noeud a un état de propagation parmi le groupe d'actif (193-1) et d'inactif (193-2).

6. Procédé (500) selon la revendication 1, dans lequel l'attribut d'affichage d'un noeud a un état d'affichage parmi le groupe d'actif (192-1), d'inactif (192-2) et d'inactif implicitement (192-3).

7. Produit de programme d'ordinateur (100), réalisé par un support de données (970) ou transporté par un signal (980), le produit de programme d'ordinateur (100) ayant une pluralité d'instructions afin de provoquer qu'au moins un processeur (910) d'au moins un ordinateur (900) exécute les étapes suivantes :
la fourniture (510) d'une arborescence prédéfinie (110), l'arborescence (110) ayant une pluralité de noeuds (111-119), opération pendant laquelle chaque noeud a un attribut de propagation prédéfini (193), un attribut de contrôlé prédéfini (191) et un attribut d'affichage prédéfini (192) ;
la modification (520) de l'attribut de contrôle (191) d'un noeud (115), opération pendant laquelle le noeud (115) définit une sous-arborescence (120) de l'arborescence (110), chaque noeud de la sous-arborescence (120) ayant un noeud apparenté ;
le calcul (530) de l'attribut de propagation (193) de chaque noeud (115-119) de la sous-arborescence (120) en fonction de l'attribut de contrôle (191) du noeud et de l'attribut de propagation (193) du noeud apparenté correspondant conformément à des règles de propagation prédéfinies (180) ;
le réglage (540) de l'attribut d'affichage (192) de chaque noeud (115-119) de la sous-arborescence par rapport à l'attribut de contrôle (191) du noeud et à l'attribut de propagation (193) du noeud conformément à des règles d'affichage prédéfinies (190) ; et
la visualisation d'une représentation graphique spécifique de l'attribut d'affichage (192) du noeud (115).

8. Produit de programme d'ordinateur (100) selon la revendication 7, provoquant que l'au moins un processeur (910) exécute l'étape de calcul de l'attribut de propagation (530) en répétant pour chaque noeud (115-119) de la sous-arborescence (120) les étapes suivantes :
la mise au point (532) de l'attribut de propagation (193) du noeud (115) sur un premier état de propagation (193-1) si l'attribut de contrôle (191) du noeud (115) a un premier état de contrôle (191-1) et l'attribut de propagation (193) du noeud apparenté (111) du noeud (115) a le premier état de propagation (193-1) ; et
sinon, la mise au point (534) de l'attribut de propagation (193) du noeud (115) sur un deuxième état de propagation (193-2).

9. Produit de programme d'ordinateur (100) selon la revendication 8, provoquant que l'au moins un processeur (910) exécute l'étape de réglage de l'attribut d'affichage (540) en répétant pour chaque noeud (115-119) de la sous-arborescence (120) les étapes suivantes :
la mise au point (542) de l'attribut d'affichage (192) du noeud (115) sur un premier état d'affichage (192-1) si l'attribut de contrôle (191) du noeud (115) a le premier état de contrôle (191-1) et l'attribut de propagation (193) du noeud (115) a le premier état de propagation (193-1) ;
la mise au point (544) de l'attribut d'affichage (192) du noeud (115) sur un deuxième état d'affichage (192-2) si l'attribut de contrôle (191) du noeud (115) a le deuxième état de contrôle (191-2) et l'attribut de propagation (193) du noeud (115) a le deuxième état de propagation (193-2) ; et
la mise au point (546) de l'attribut d'affichage (192) du noeud (115) sur un troisième état d'affichage (192-3) si l'attribut de contrôle (191) du noeud (115) a le premier état de contrôle (191-1) et l'attribut de propagation (193) du noeud (115) a le deuxième état de propagation (193-2).

10. Système d'ordinateur (999) comprenant au moins un ordinateur (900) ; l'ordinateur (900) fournissant (510) une arborescence prédéfinie (110) ; l'arborescence (110) ayant une pluralité de noeuds (111-119), opération pendant laquelle chaque noeud a un attribut de propagation prédéfini (193), un attribut de contrôlé prédéfini (191) et un attribut d'affichage prédéfini (192) ; l'ordinateur (900) modifiant (520) en outre l'attribut de contrôle (191) d'un noeud (115), opération pendant laquelle le noeud (115) définit une sous-arborescence (120) de l'arborescence (110) ; chaque noeud de la sous-arborescence (120) ayant un noeud apparenté ;
l'ordinateur (900) calculant (530) l'attribut de propagation (193) de chaque noeud (115-119) de la sous-arborescence (120) en fonction de l'attribut de contrôle (193) du noeud et de l'attribut de propagation du noeud apparenté du noeud conformément à des règles de propagation prédéfinies (180) ;
l'ordinateur réglant (540) l'attribut d'affichage (192) de chaque noeud (115-119) de la sous-arborescence (120) par rapport à l'attribut de contrôle (191) du noeud et à l'attribut de propagation (193) du noeud conformément à des règles d'affichage prédéfinies (190) ; et
l'ordinateur (900) utilisant une interface utilisateur (960) pour visualiser une représentation graphique spécifique de l'attribut d'affichage (192) du noeud (115).
